# EUROPEAN PATENT SPECIFICATION

(11) **EP 4 234 416 B1**
(45) Date of publication and mention of the grant of the patent: **23.04.2025**
(21) Application number: 22290009.4
(22) Date of filing: 24.02.2022
(51) Int. Cl.: B64G 1/12, B64G 99/00, B64G 1/22, B64G 1/64, B64G 1/60

(54) **EXPANDABLE STRUCTURAL MODULES FOR TOROIDAL SPACE STATION STRUCTURES, SPACE STATION SUBSTRUCTURES, TOROIDAL SPACE STATION STRUCTURES, AND METHODS OF CONSTRUCTING TOROIDAL SPACE STATION STRUCTURES**
ERWEITERBARE STRUKTURMODULE FÜR RINGFÖRMIGE RAUMSTATIONSSTRUKTUREN, RAUMSTATIONSUNTERSTRUKTUREN, RINGFÖRMIGE RAUMSTATIONSSTRUKTUREN UND VERFAHREN ZUR HERSTELLUNG VON RINGFÖRMIGEN RAUMSTATIONSSTRUKTUREN
MODULES STRUCTURAUX EXTENSIBLES POUR STRUCTURES DE STATIONS SPATIALES TOROÏDALES, SOUS-STRUCTURES DE STATIONS SPATIALES, STRUCTURES DE STATIONS SPATIALES TOROÏDALES ET PROCÉDÉS DE CONSTRUCTION DE STRUCTURES DE STATIONS SPATIALES TOROÏDALES

(43) Date of publication of application: 30.08.2023
(73) Proprietor: Nixon, David Anthony, 69640 Ville-sur-Jarnioux (FR)
(72) Inventor: Nixon, David Anthony, 69640 Ville-sur-Jarnioux (FR)
(74) Representative: Abel & Imray LLP

(56) References cited:
- EP-A2- 0 288 323
- CN-A- 114 030 651
- IT-A1- 201800 010 818
- US-A- 4 057 207
- US-A- 4 599 832
- US-A- 4 604 844
- US-A- 5 429 851
- US-A1- 2006 107 611

## Description

### Field of the Invention

The present invention concerns expandable structural modules for toroidal space station structures, space station substructures, toroidal space station structures, and methods of constructing toroidal space station structures. More particularly, but not exclusively, the invention concerns toroidal space station structures formed from expandable structural modules that are transported into space in a collapsed configuration, and transformed into an expanded configuration once in space. The invention also concerns methods of constructing toroidal space station structures from expandable space structural modules and from substructures comprising a plurality of the structural modules.

### Background of the Invention

Toroidal (ring-shaped) space stations, in particular those that rotate so that centripetal acceleration provides a form of artificial gravity for the space station, have been proposed since the early 20^{th} century. These include a revolving space station design originally conceived by Konstantin Tsiolkovsky in 1903 and further developed by Herman Potočnik in the 1920s and Wernher von Braun in the 1950s, the Stanford torus by NASA and others at Stanford University in 1975, and the proposal by Hughes Aircraft for a wheel-shaped space station in the 1980s. However, no toroidal space station has ever been constructed.

The decommissioning and disposal of the International Space Station has been scheduled for 2030, and as a result interest in toroidal space stations is increasing.

Proposed toroidal space stations are usually very large in size, with diameters extending from the hundreds of metres to several kilometres. They are required to be so large to achieve the rate of spin necessary to provide artificial gravity, such as Earth gravity, around the rim while rotating sufficiently slowly to be physiologically acceptable to humans who experience adverse vestibular and other reactions to highspeed physical rotation. In addition, some designs of toroidal space stations feature large amounts of tension and bracing structures that bisect the ring (such as hub-and-spoke-type designs), which increases the amount of material that needs to be transported into space, adds complexity to the construction process there, and increases overall costs. As a result, the viable transportation into space of the materials from which to construct toroidal space stations presents a significant technical and operational challenge.

In addition, existing proposals require re-purposing and/or re-outfitting of existing elements (e.g. space vehicle structures), involving significant construction or modification in space, which is also complex and costly.

Known proposed methods of constructing toroidal space stations include the following examples:
US 4057207 A (Hogan, John Paul), published 8 November 1977, discloses a module, following the geometry of joined truncated icosahedra, that is designed to provide, when a plurality of them are joined to form a space vehicle, at least a subsistence environment for terrestrial life, including a centrifugally induced artificial gravitational field, as well as an in-orbit base from which larger space structures can be built.
US 2009/302166 A1 (Meyers, Eugene Walter), published 10 December 2009, discloses a launch vehicle for a space station includes a crew transport vehicle having an orbiter, a cylindrical cargo module separable from the orbiter when in low earth orbit, and a first liquid fuel rocket engine section coupled to the cargo module operable to assist in placement of the launch vehicle in low earth orbit. The liquid fuel tank of the launch tank is convertible to form living and working spaces for the space station. Several of these fuel tanks can be arranged in a ring.
RU 2013106170 A (A 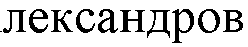 O 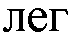 A 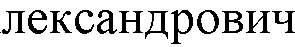 ), published 20 August 2014, discloses a space station with artificial gravity, with a non-expendable system of orientation, and emergency rescue system.

All of these known systems require the transportation of prefabricated modules or complex new structures into space, or the repurposing of vehicle material (such as spent propellant tanks) in order to construct the toroidal space station.

An expandible structure, not described as being in the field of space engineering or toroidal space stations, is shown in the following document:
US4599832A (Benton, Max D; Robbins, William M Jr.), published 15 July 1986, discloses an extendible structure that can be collapsed to a shorter length and extended to a longer length. A pair of station members are interconnected by at least three longeron members. Each longeron member has two longeron elements that are pivoted together so they can fold toward one another or aligned to form a column. Each element is pivoted to a respective station member. Stays rigidify the structure when extended, and are opposed by buckling springs (Euler columns) that exert an outward resultant force on each longeron member at its folding point.

The present invention seeks to solve and/or mitigate some or all of the above-mentioned problems. Alternatively, and/or additionally, the present invention seeks to provide improved expandable structural modules for toroidal space station structures, improved space station substructures, improved toroidal space station structures, and improved methods of constructing toroidal space station structures.

### Summary of the Invention

In accordance with a first aspect of the invention there is provided an expandable structural module for a toroidal space station structure, the expandable structural module comprising:
a first bulkhead and a second bulkhead forming first and second opposite ends of the expandable structural module, the first bulkhead being arranged to be attached to a corresponding bulkhead of a further expandable structural module;
a plurality of adjustable structural members connecting the first bulkhead and the second bulkhead;
wherein the expandable structural module is transformable between:
   a collapsed configuration in which the first bulkhead and second bulkhead are held a first distance apart by the adjustable structural members; and an expanded configuration in which the first bulkhead and second bulkhead are held a second distance apart by the adjustable structural members, the second distance being larger than the first distance,
   wherein the first bulkhead comprises a spacing mechanism for attaching the first bulkhead to the corresponding bulkhead of the adjacent and adjoining expandable structural module and
   wherein the spacing mechanism is arranged to transform between a shortened configuration in which the first bulkhead and the corresponding bulkhead are held
   parallel to each other, and a spaced configuration in which the first bulkhead and the corresponding bulkhead are held at a non-zero angle with respect to each other.

It will be appreciated that a toroidal space station structure may be a functioning inhabited space station (or the underlying structural thereof), but may also be a demonstration system used to test a rotating space station design.

By having the expandable structural module transformable between a collapsed configuration and an expanded configuration, the expandable module can be transported into space in the collapsed configuration, and transformed into the expanded configuration thereafter. This allows efficient use of launch vehicle volume during transportation into space. In addition, the first bulkhead being arranged to be attached to a corresponding bulkhead of a further expandable structural module allows for easier construction of a toroidal space station structure from the expandable structural modules, as once in space each expandable structural module can be expanded into the expanded configuration and a plurality of such modules attached together, rather than the expandable structural modules having to be constructed in space from their component parts.

Each structural member may be connected to the perimeter of the first bulkhead and to the perimeter of the second bulkhead. It will be appreciated that the perimeters of the bulkheads include locations in the vicinity of the outer edges of the bulkheads, as well as on the outer edges themselves.

The first distance between the first bulkhead and second bulkhead in the collapsed configuration may be zero. At the first distance, the first bulkhead and the second bulkhead may be touching. The second distance between the first bulkhead and second bulkhead in the expanded configuration may be such that the structural members are extended to form a straight or substantially straight strut.

The expandable structural module may comprise a number of sides that are orthogonal to the faces of each of the bulkheads. Each bulkhead face may be perpendicular to the length of the structural members when the structural members are in the extended position.

The expandable structural module may be polygonal in cross-section. The cross-section of the expandable structural module may be a polygon with between five and sixteen sides. The cross-section of the expandable module may be a polygon with eight sides. The polygon may be a regular octagon. Such a polygon results in the efficient use of space by the expandable structural module within a payload compartment of a space vehicle (which may, for example, have a circular cross-section).

Each structural member may comprise a first part connected to the first bulkhead and a second part connected to the second bulkhead, the first part being hingably connected to the second part. The hinge connection the between the first part and second part of the structural members may be a stored-energy joint, configured such that the joint is biased to move the first part and second part away from each other to move the structural member from the collapsed configuration to the extended configuration.

The first bulkhead may comprise a plurality of struts extending from the perimeter towards the centre of the bulkhead, wherein each strut has on its surface facing the interior of the expandable module a recess, and wherein each strut is arranged so that a corresponding structural member of the plurality of structural members is at least partially located within the recess when the structural members are in the collapsed position. The second bulkhead may also comprise such a plurality of struts. In this way, the structural members have a reduced or no effect on the first distance between the first bulkhead and second bulkhead when the expandable module is in the collapsed position.

The expandable module may further comprise a plurality of brace members connecting the first bulkhead and second bulkhead, wherein the brace members are located between the structural members. The first bulkhead may comprise a plurality of struts extending from the perimeter towards the centre of the bulkhead, wherein each strut has on its surface facing the interior of the expandable module a recess, and wherein each strut is arranged so that a corresponding brace member of the plurality of brace members is at least partially located within the recess when the structural members are in the collapsed position. Again, the second bulkhead may also comprise such a plurality of struts. In this way, again, the brace members have a reduced or no effect on the first distance between the first bulkhead and second bulkhead when the expandable module is in the collapsed position. The recess in which a brace member is at least partially located may be the same recess in which a strut is at least partially located, or may be a separate recess. Different parts of a brace member may be located in different recesses.

The first bulkhead comprises a spacing mechanism for attaching the first bulkhead to the corresponding bulkhead of the further expandable module. The spacing mechanism is arranged to move between a shortened configuration in which the first bulkhead and the corresponding bulkhead are held parallel to each other, and a spaced configuration in which the first bulkhead and the corresponding bulkhead are held at a non-zero angle with respect to each other. In this way, when multiple expandable structural modules are attached together in the expanded configuration, connected by spacing mechanisms is the spaced configuration, they will form an arc. Conversely, when the spacing mechanisms is the shortened configuration, the multiple expandable modules will form a straight line.

The shortened configuration may correspond to a substantially closed position, where the perimeters of the first bulkhead and the corresponding bulkhead are in contact around the substantially the entire perimeter of the first bulkhead and corresponding bulkhead. The spaced configuration may correspond to an open position where the perimeters first bulkhead and the corresponding bulkhead are not touching over a substantial part of their perimeters.

The spacing mechanism may comprise one or more hinged connectors, a first end of each hinged connector being hingably mounted to the perimeter of the first bulkhead. The one or more hinged connectors may be arranged to be hingably attached to one or more corresponding hinged connectors hingably mounted to the perimeter of the corresponding bulkhead of the further expandable module.

At least some of the one or more hinged connectors may comprise actuatable flaps. The one or more actuatable flaps are configured to attach to the corresponding hinged connectors hingably mounted to the perimeter of the corresponding bulkhead of the further expandable structural module. Each of the one or more actuatable flaps may be rotatable to an angle with respect to the face of the bulkhead that results in the first bulkhead and the corresponding bulkhead being in the non-zero angle when they are in the spaced configuration. The rotation of the actuatable flaps may apply a force to the face of the bulkhead and the connecting surface of the further frame module such that the connecting surface and the further frame module are displaced relative to each other proximal to their respective perimeters.

The spacing mechanism allows advantageously for displacement in a manner which requires no collisions or impacts between the face of the bulkhead and the connecting surface of the further frame module, thereby reducing the likelihood of any damage occurring as the modular space station is assembled in orbit. As the first non-zero angle increases, the curve or arc of any substructure formed of the structural members becomes more pronounced. Thus, advantageously, the spacing mechanism allows for the control or adjustment of the curve or arc of a substructure formed of the structural modules.

The expandable structural module may comprise one or more deployable photovoltaic blankets. The one or more photovoltaic blankets may be stowable, and configured to be deployed once the expandable module is transformed to the expanded configuration. The one or more photovoltaic blankets may form one or more sides of the expandable module. The one or more photovoltaic blankets may be deployed automatically.

The expandable structural module may further comprise an engine system. The engine system may comprise one or more low-thrust engines. Each of the one or more engines may be mounted on hinged arms, so that they can be moved between a stowed configuration and a deployed configuration. The one or more engines when in the deployed configuration can apply thrust to the assembled toroidal space station structure to rotate it when in space. The engines may be rotatably-mounted between the hinged arms. The engines are optionally rotatably mounted on a gimball. This is advantageous as it allows the direction of thrust produced by the engines, and hence the direction of the spin of a space station comprising the engine system, to be reversed by rotating the engines.

The engine system may have a generally frustoconical shape, or be arranged to fit within a generally frustoconical shape, to fit into the payload compartment of a payload delivery vehicle (for example, the nose of a rocket). The engine system may comprise a frame having generally frustoconical shape.

The expandable structural module may further comprise a propulsion system. The propulsion system may comprise a plurality of engines. The engines may be mounted between the struts of a bulkhead.

The expandable structural module may further comprise an attitude control system. The attitude control system may comprise one or more clustered thruster banks. The clustered thruster banks may be located around the perimeter of the first bulkhead and/or second bulkhead.

The expandable structural module may comprise a robotic arm for grasping another expandable structural module, and bringing the another expandable structural module towards the expandable structural module so that the expandable structural modules can be attached together.

In accordance with a second aspect of the invention there is provided a space station substructure comprising a first expandable structural module and a second expandable structural module as described above, wherein the first bulkhead of the first expandable module is attached to the first bulkhead of the second expandable structural module to form at least part of the space station substructure, the space station substructure being transformable between:
a stowable configuration in which the first expandable structural module and second expandable structural module are in the collapsed configuration;
a deployed configuration in which the first expandable structural module and second expandable structural module are in the expanded configuration.

The space station substructure may comprise a multiplicity of expandable structural modules attached together end-to-end. The space station substructure comprises at least two expandable structural modules, and may comprise up to ten, up to twenty, up to thirty, or even more expandable structural modules. It will be appreciated that while the space station substructure could comprise only two expandable structural modules, in order to have a substructure with an appreciable arc, significantly more than two structural modules will be required.

Where the multiplicity of expandable structural modules are held together so that the faces of their bulkheads are at a non-zero angle with respect to each other, the space station substructure will form an arc.

The space station substructure may further comprise an engine system. The engine system may be mounted on or adjacent to the outermost bulkhead of an expandable structural module at an end of the space station substructure.

The space station substructure may further comprise a propulsion system. The propulsion system may be mounted to the outermost bulkhead of an expandable structural module at an end of the space station substructure. Where the space station substructure also comprises an engine system, the engine system and propulsion system may be mounted on the exposed bulkheads of the expandable structural module at opposite ends of the space station substructure.

The space station substructure may further comprise an attitude control system. The attitude control system may be mounted to the outside of an expandable structural module at an end of the space station substructure. Where the space station substructure also comprises a propulsion system, the attitude control system may be mounted to the expandable structural module to which the propulsion system is mounted.

In accordance with a third aspect of the invention there is provided a toroidal space station structure comprising a plurality of expandable structural modules as described above.

The structure of the toroidal space station structure may be configured to transmit loads around its perimeter. In this configuration, the toroidal space station structure may be hubless and/or spokeless such that there are no trusses or other supporting members within the area enclosed by the toroidal ring. The toroidal space station structure may be a demonstration system. This allows a design for a toroidal space station to be tested as a proof of concept. Alternatively, the toroidal space station structure may be the structure of an inhabitable space station.

In accordance with a fourth aspect of the invention there is provided a method of constructing a toroidal space station structure, the method comprising the steps of:
transporting a plurality of expandable structural modules as into space, wherein the plurality of expandable structural modules as described above, and wherein the plurality of expandable structural modules are transported while in the collapsed configuration;
transforming the plurality of expandable structural modules into the expanded configuration;
attaching the plurality of expandable structural modules together to form the toroidal space station structure.

In this way, a particularly efficient method of transporting the materials for a toroidal space station structure into space, for example within a launch vehicle payload compartment, and constructing the toroidal space station structure in space, is provided.

The expandable structural modules may be transformed into the expanded configuration before or after being attached to other expandable structural modules.

The method may further comprise, prior to the step of transporting the plurality of expandable structural modules into space, the step of attaching the plurality of expandable structural modules together to form a plurality of space station substructures as described above;
wherein the step of transporting the plurality of expandable structural modules into space comprises transporting the plurality of space station substructures into space, wherein the plurality of space station substructures are transported while in the stowable configuration;
wherein the step of transforming the plurality of expandable structural modules into the expanded configuration comprises transforming the plurality of space station substructures into the deployed configuration;
and wherein the step of attaching the expandable structural modules together comprises attaching the plurality of space station substructure together.

The space station substructures may be brought together in space using attitude control systems that have been described above. The substructures may be brought together to form a part (for example, half) of a toroidal space station structure before being brought together to form the complete space station.

It will of course be appreciated that features described in relation to one aspect of the present invention may be incorporated into other aspects of the present invention.

### Description of the Drawings

Embodiments of the present invention will now be described by way of example only with reference to the accompanying schematic drawings of which:
Figure 1 shows an expandable structural module according to an embodiment of the invention in an expanded configuration;
Figure 2a shows the expandable structural module of Figure 1 in a collapsed configuration;
Figure 2b shows the expandable structural module midway between the expanded and collapsed configurations;
Figure 3 shows an expandable structural module with deployed photovoltaic blankets;
Figure 4a shows bulkheads of first and second expandable structural modules connected by a hinge mechanism;
Figure 4b shows the hinge mechanism of Figure 4a;
Figure 5a shows an engine system for use with the expandable structural module, with engines deployed;
Figure 5b shows the engine system of Figure 5a, with engines stowed within the frame of the engine system;
Figure 6a shows a space station substructure according to an embodiment of the invention, comprising a multiplicity of expandable structural modules and an engine and propulsion system, in a stowable configuration within a launch vehicle payload compartment;
Figure 6b shows another view of the space station substructure in the stowable configuration;
Figure 7 shows a portion of the space station substructure in a deployed configuration;
Figure 8 shows the connection in space of two space stations substructures using a robotic arm;
Figure 9 shows a schematic view of a toroidal space station structure according to an embodiment of the invention;
Figure 10a and 10b show the steps of constructing the toroidal space station structure of Figure 9 from six space station substructures; and
Figure 11 shows the toroidal space station structure when disassembled.

### Detailed Description

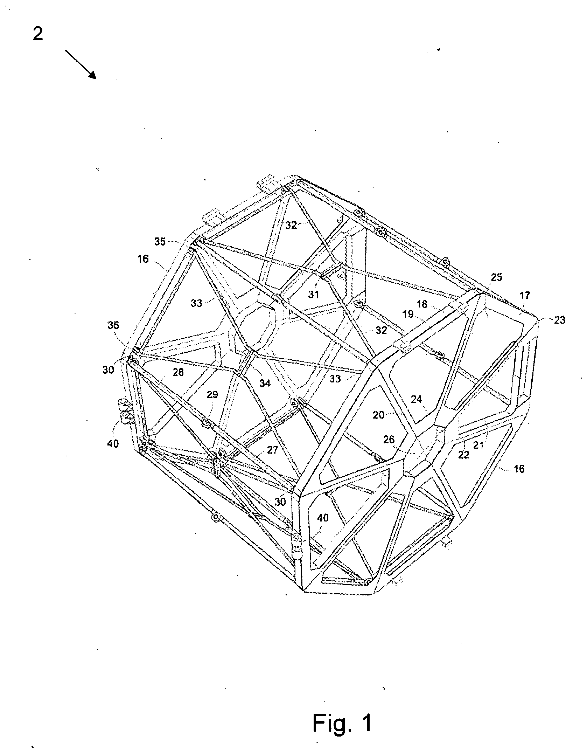

An expandable structural module for a toroidal space station structure in accordance with an embodiment of the invention is now described, with reference to Figures 1 to 3. Figure 1 shows the expandable structural module 2 in an expanded configuration. The structural frame of the expandable structural module 2 is shown, with any panelling, external photovoltaic arrays or the like omitted for the sake of clarity.

The expandable structural module 2 takes the general form of an octagonal prism. At either end of the expandable structural module 2 are bulkheads 16, arranged parallel to each other. Each bulkhead 16 comprises an outer perimeter frame 17, the perimeter frame 17 taking the form of an octagon. The perimeter frame 17 is formed of an octagonal beam 19 with an outer flange 18. On each bulkhead 16, eight radial struts 20 extend inwardly from the perimeter frame 17 to a central ring 24, arranged equidistantly around the perimeter of the bulkhead 16. Each radial strut 20 is formed from a web 22 with each radial strut having flanges 21. The spaces between perimeter frame 17, radial struts 20 and central ring 24 form voids 25, 26, i.e. regions of free space, in the bulkheads 16.

The bulkheads 16 are connected by structural members 27 and X-braces 31, which form the sides of the expandable structural module 2. Eight structural members 27 extend between the bulkheads 16, in a direction orthogonal to the plane of each bulkhead 16. Each structural member 27 comprises a tube 28 hinged at its midpoint with a spring-loaded hinge 29, and at each end connected to a bulkhead 16 by a hinge 30. Eight X-braces 31 span the rectangular planes that form the sides of the prism, each plane being defined by two adjacent structural members 27. Each X-brace 31 comprises two frames 33 of a truncated triangle shape. The base of each frame 33 is connected at either side to one of the bulkheads 16 by a hinge 35, and the truncated tops of the frames 33 are connected together by a hinge 34.

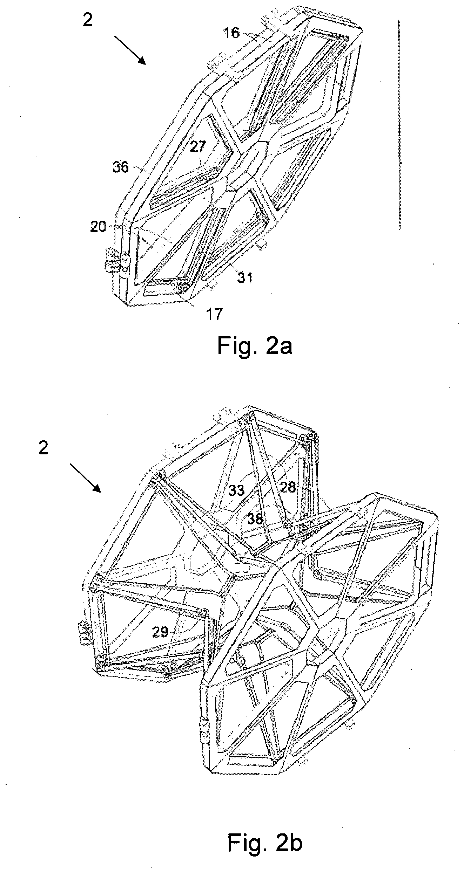

Figure 2a shows the expandable structural module 2 in a collapsed configuration, and Figure 2b shows the expandable structural module 2 midway between the expanded configuration and collapsed configuration. In the collapsed configuration, the two bulkheads 16 are in contact across their entire perimeter 17, defining a contact region 36. The expandable structural module 2 is moved to the collapsed configuration by folding the structural member 27 using the hinges 29 and 30, so that the tubes 28 are folded against each other such that they are parallel and touching along their length. In the collapsed configuration, the structural members 27 are located within recesses formed by flanges 18 of the radial struts 20. Similarly, the X-braces 31 are folded using the hinges 34 and 35, such that the frames 33 are touching along their length and are located within the same recesses as the structural members 27.

In this way, it can be seen that the expandable structural module 2 can be transformed between an expanded configuration and a collapsed configuration. In the collapsed configuration the structural members 27 and X-braces 31 fold flat and are located within the recesses of the bulkheads 16, so that bulkheads 16 are touching and the expandable structural module 2 has minimal thickness for transportation. As mentioned above, the hinges 29 of the structural members 27 are spring-loaded, which biases the expandable structural module 2 to move from the collapsed configuration to the expanded configuration, as described in more detail below.

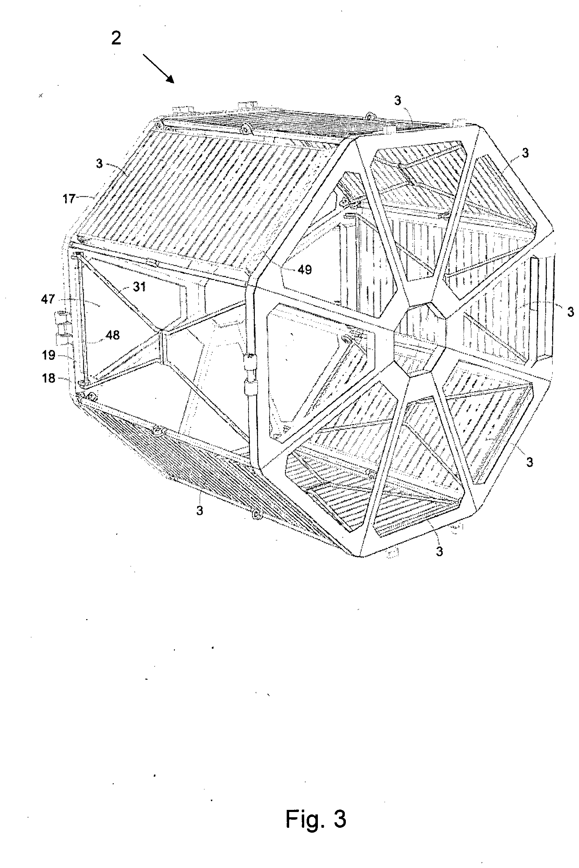

Figure 3 shows the expandable structural module 2 again in the expanded configuration. On seven of the eight sides of the expandable structural module 2 are photovoltaic blankets 3, each of which covers the area of the side spanned by the X-braces 31. The photovoltaic blankets 3 are contractible, so that they can be fixed at each end to one of the bulkheads 16, and contract and expand as required as the expandable structural module 2 moves between the collapsed configuration and the expanded configuration. It will be appreciated that photovoltaic blankets 3 may be provided on none, some or all of the sides of an expandable structural module 2, as desired.

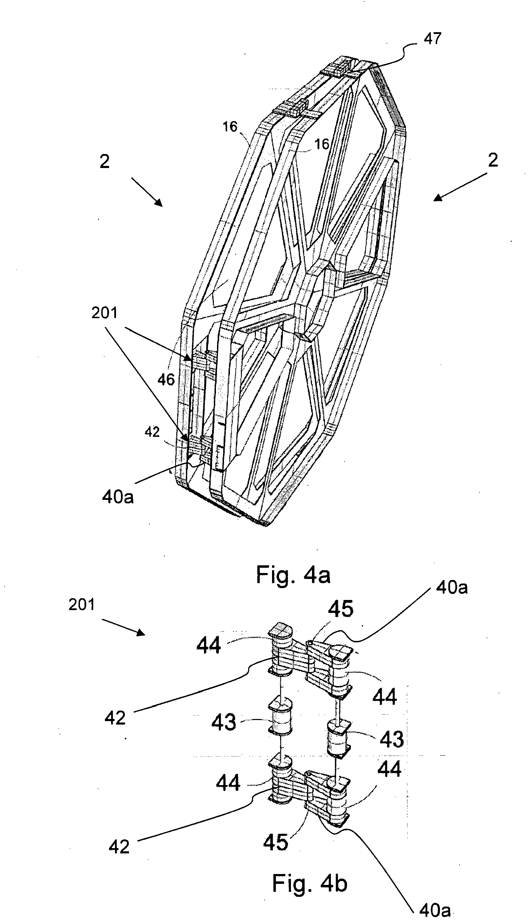

Figure 4a shows bulkheads 16 of two different expandable structural modules 2 connected on first sides by a spacing mechanism 201, with the spacing mechanism 201 being shown in more detail on Figure 4b. The spacing mechanism 201 comprises two hinged connectors 40a mounted on the perimeter of a first bulkhead 16 of the expandable structural modules 2. The spacing mechanism 201 also comprises a further two hinged connectors 42 mounted on the perimeter of the second bulkhead 16 of the expandable modules 2. Each hinged connector 40a is hingably connected to a corresponding hinged connector 42 by a pivot 45. Electric motors 43 mounted on each bulkhead 16 are connected to four gear reduction drives 44, each of which is associated with one of the hinged connectors 40a, 42, so that the electric motors 43 can, via the gear reduction drives 44, cause the hinged connectors 40a and 42 to rotate with respect to the bulkheads 16.

Second sides of the bulkheads 16 opposite the first sides are hingably connected (not visible in Figure 4a). Further, on the sides of the bulkheads 16 between the first sides and second sides are stays 47, which allow those sides of the bulkheads 16 to move together and apart, but prevent the bulkheads 16 moving apart by more than a desired distance.

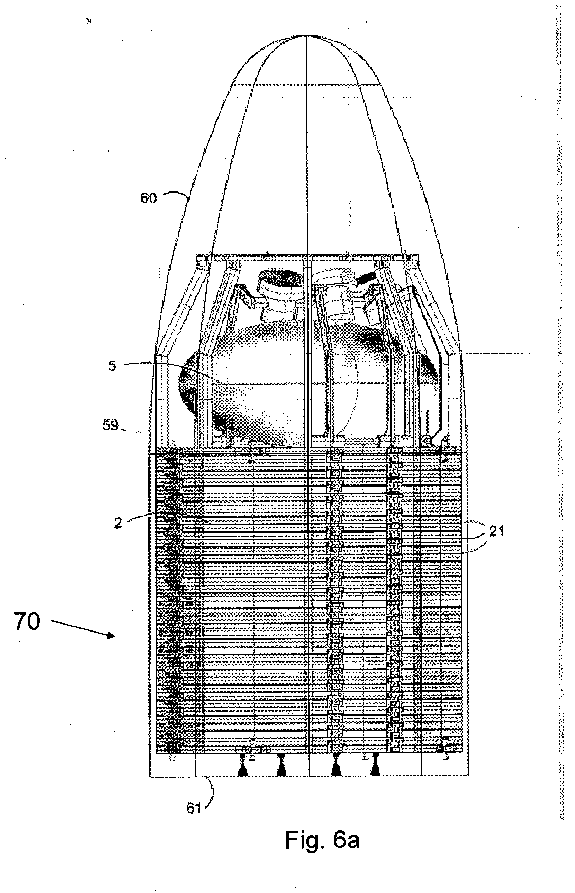

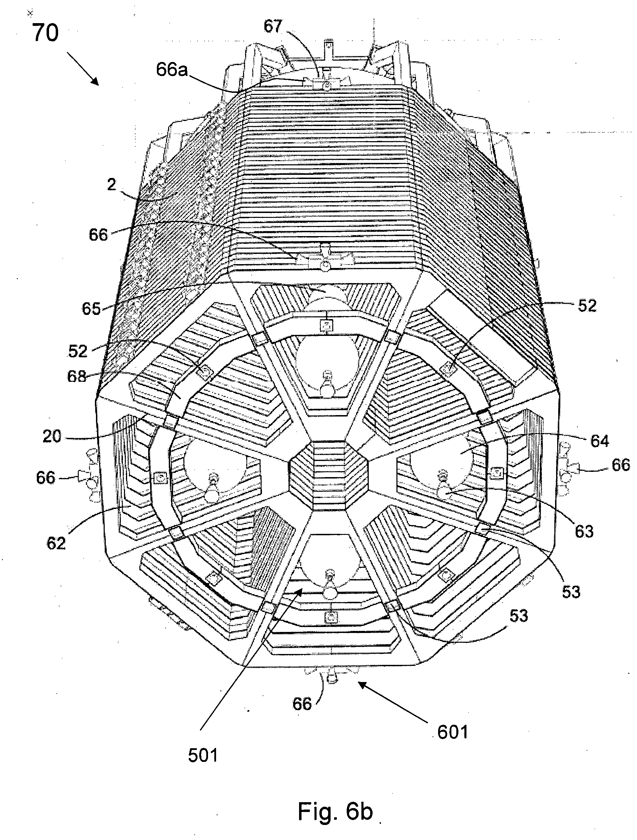

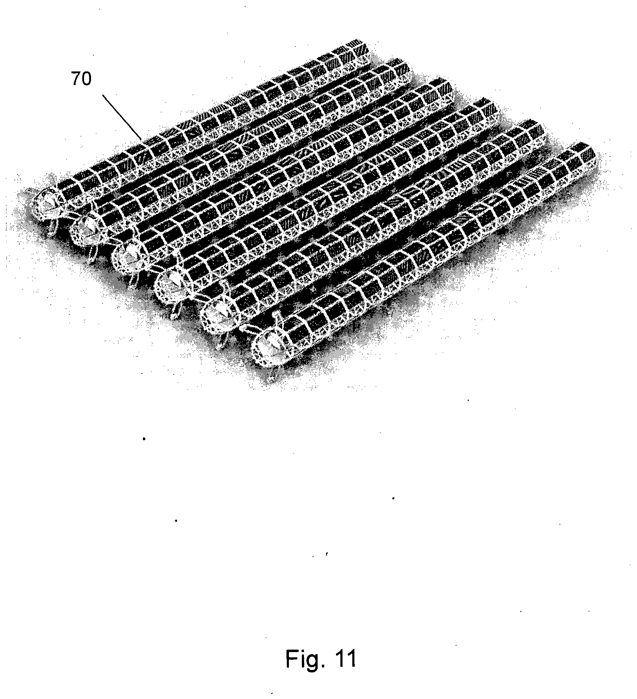

In Figures 4a and 4b the spacing mechanism 201 is shown in a spaced configuration, in which the hinged connectors 40a and 42 are in a straight line so giving a maximum distance between the bulkheads 16. As can be seen, this causes the bulkheads 16 to be held at a non-zero angle with respect to each other. The electrical motors 43 can, via the gear reduction drives 44, rotate the hinged connectors 40a and 42 towards the bulkheads 16 to which they are attached, so that the spacing mechanism 201 moves to a shortened, and ultimately, closed, configuration in which the first bulkhead and the corresponding bulkhead are held parallel to each other, so that they are touching. (Expandable structural modules 2 connected by spacing mechanism 201 in the shortened configuration are shown in Figures 6a, 6b and 11 described later below.)

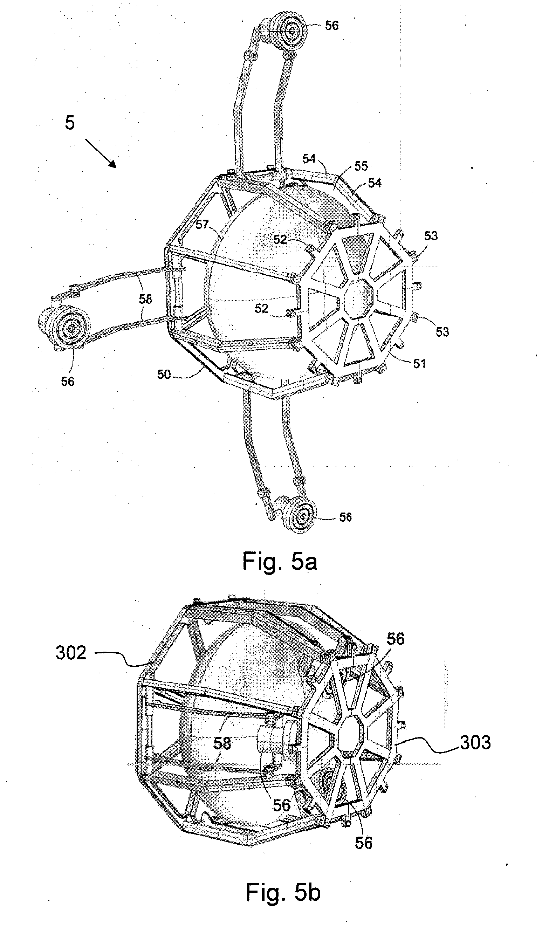

An engine system for use with the expandable structural module 2 is now described with reference to Figures 5a and 5b. Figure 5a shows the engine system 5 with engines deployed outside the frame of the engine system, and Figure 5a shows the engine system 5 with engines stowed within the frame of the engine system.

The base 302 of the engine system 5 is arranged to be attached to the bulkhead 16 of an expandable structural module 2, having the same size and shape as a bulkhead 16. The engine system 5 has a generally frustoconically-shape frame, formed of struts 54 that extend from the base 302 and then taper to a top 303, which is also octagonal shaped but with a diameter less than the base 302. A propellant tank 57 is mounted within the frame of the engine system 5, and three low-thrust engines 56 are mounted on hinged arms 58 that can be moved between a deployed position in which the engines 56 are positioned away from the frame of the engine system 5, as shown in Figure 5a, and a stowed position in which the engines 56 and arms 58 are stowed within the frame of the engine system 5, as shown in Figure 5b. Each engine 56 is gimbally-mounted between the hinged arms 58 so that its direction of thrust can be reversed by rotating it on the gimbal.

A space station substructure in accordance with an embodiment of the invention is now described, with reference to Figures 6a to 8.

Figure 6a shows the space station substructure 70 in a stowable configuration, stowed within a schematically shown launch vehicle payload compartment 60. Figure 6b is another view of the space station substructure 70 without the launch vehicle payload compartment 60 shown. The space station substructure 70 comprises a plurality of expandable structural modules 2 attached together. The expandable structural modules 2 are all in the collapsed configuration, and the expandable structural modules 2 are attached together by spacing mechanisms 201 and hinges 40, all of which are in the shortened configuration. Thus, as can be seen, the expandable structural modules 2 are stacked together in parallel, taking up the minimum space within the launch vehicle payload compartment. An engine system 5 is attached to the topmost expandable module 2, extending into the tapered nose of the launch vehicle payload compartment 60.

At the base of the space station substructure 70 shown in Figure 6b, i.e. at the opposite end to the engine system 5, is a propulsion system 501. The propulsion system 501 is located in the voids 25 and 62 formed between the radial struts 20 of the bulkheads 16 of the expandable structural modules 2. The propulsion system 501 comprises four engines 63, corresponding propellant tanks 64, and corresponding pressurant tanks 65 above the propellant tanks 64. Additionally, on the exterior of the space station substructure 70 is an attitude control system 601, which comprises four thruster clusters 66 mounted on the perimeter of the bulkhead 16 at the base of the space station substructure 70, and four thruster clusters 67 mounted on the perimeter of the bulkhead 16 at the top of the space station substructure 70. Each thruster cluster 66, 67 comprises five thrusters 66a per cluster to provide thrust in three axes. The use of the propulsion system 501 and attitude control system 601 is described in more detail below.

On the outermost face of the base of the space station substructure 70 is a base fixing 68, which corresponds in size and shape to the top 303 of the engine system 5, the use of which is described in more detail below.

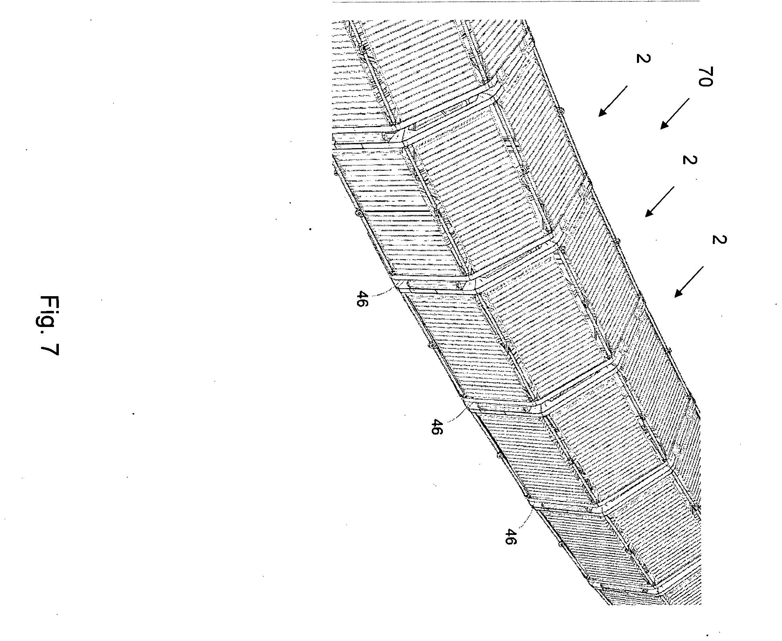

Figure 7 shows a portion of the space station substructure 70 in a deployed configuration, in which each expandable structural module 2 is in the expanded configuration, and the spacing mechanisms 201 connecting the expandable structural modules 2 are in the spaced configuration. As can be seen, the spacing mechanisms 201 are holding each pair of expandable structural modules 2 at a non-zero angle to each other, creating gaps 46 and so causing the space station substructure 70 to form an arc.

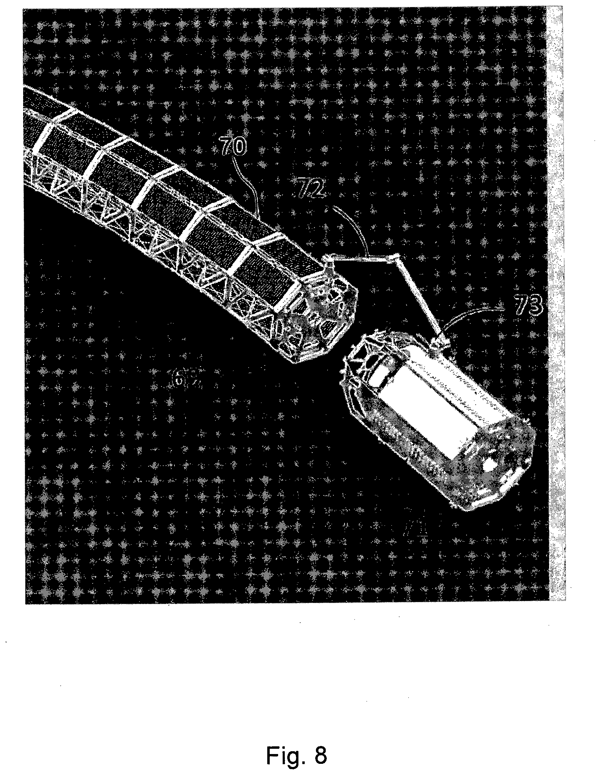

Figure 8 shows a first space station substructure 70 in the deployed configuration shown in Figure 7, and a second space station substructure 71 in the stowable configuration shown in Figures 6a and 6b. A robotic arm 72 on the base of the first space station substructure 70 has grasped the second space station substructure 71, following the second space station substructure 71 having arrived in the vicinity of the first space station substructure 70 using the propulsion system 501 and attitude control system 601 of the second space station substructure 71. (Also, if required, the propulsion system 501 and attitude control system 601 of the first space station substructure 70 may be used to bring the first space station substructures 70 and second space station substructures 71 together.)

Once the robotic arm 72 has grasped the second space station substructure 71, it can manipulate it to bring it into contact with the first space station substructure 70. The propulsion system 501 and/or attitude control system 601 of the second space station substructure 71 can be used to assist the robotic arm 72 in moving and aligning the second space station substructure 71 at close quarters, if required. Similarly, the propulsion system 501 and/or attitude control system 601 of the first space station substructure 70 can be used to keep the first space station substructure 70 in the desired position, if required. The propulsion systems 501 will not usually be used during close-quarters manipulation of the first space station substructure 70 and second space station substructure 71, for example, while moving and aligning the second space station substructure 71 with the robot arm 72, as the engines 63 of the propulsion systems 501 are high thrust and unidirectional and unsuitable for fine positioning. The attitude control system 601 would usually be used at close quarters until the substructure 71 is grasped by the robotic arm 72, at which point the attitude control system 601 is no longer used.

In particular, the top 303 of the engine system 5 of the second space station substructure 71 shown in Figure 5b is brought into contact with the base fixing 68 of the first space station 70 shown in Figure 6b, allowing the base fixing 68 and top 303 to be connected together to connect the first space station substructure 70 to the second space station substructure 71.

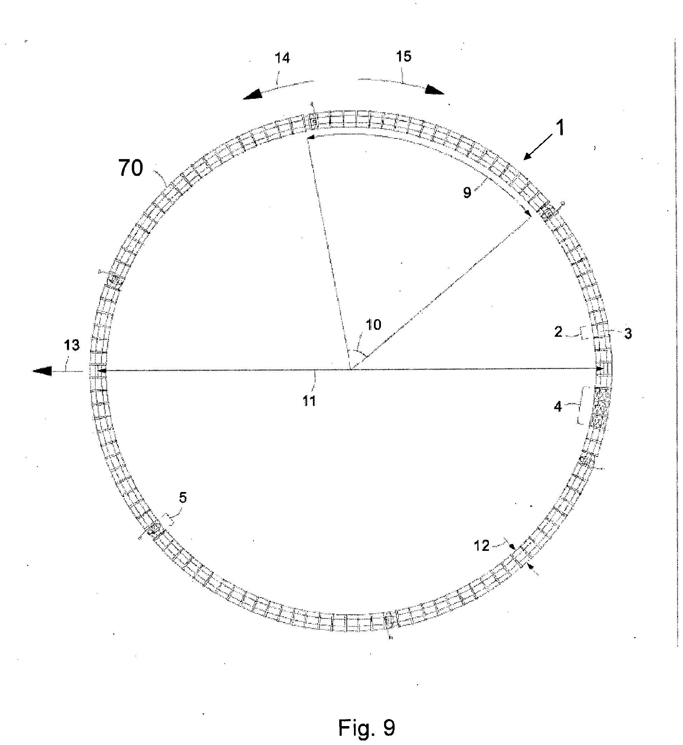

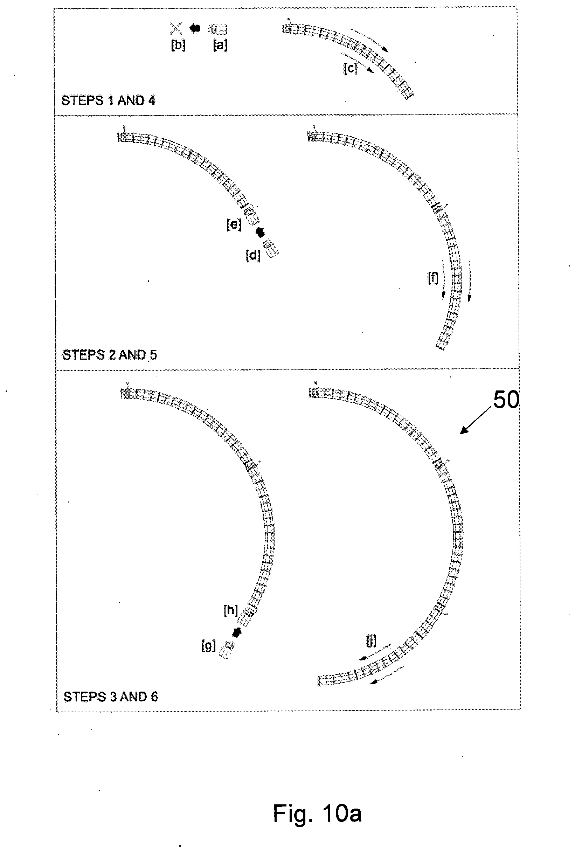

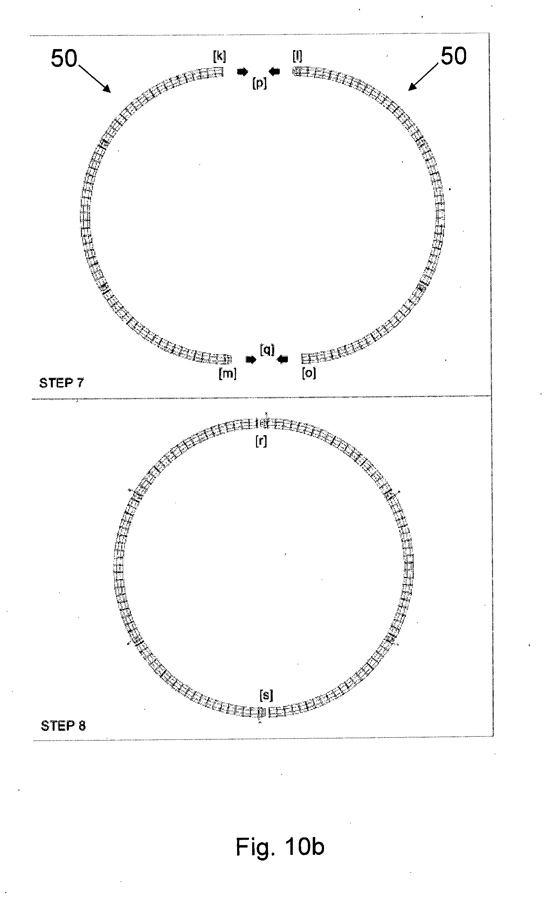

A toroidal space station structure in accordance with an embodiment of the invention is now described, with reference to Figure 9. The toroidal space station structure 1 is constructed from six space station substructures 70, as described below with reference to Figures 10a and 10b. As can be seen, each of the six space station substructures 70 forms an arc that subtends an angle 10, i.e. an angle of 60°, so spanning an arc 9, so that together the six space station substructures 70 form a closed ring of 360° to provide the complete toroidal space station structure 1. The toroidal space station structure 1 is in the form of a ring only, without any central hub, radiating spokes or truss structures or the like.

The toroidal space station structure 1 in Figure 9 is in orbit around the Earth, moving in the direction 13 shown. The toroidal space station structure 1 can be rotated in either the anticlockwise direction 14 or the clockwise direction 15, so that centripetal force resulting from the rotation forms artificial gravity for the toroidal space station structure 1. In particular, in the arrangement shown Figure 9 the engines 56 of the engine systems 5 of the six space station substructures 70 can exert a force to rotate the toroidal space station structure 1 in the clockwise direction 15.

The construction of the toroidal space station structure 1 from the six space station substructures 70 in accordance with an embodiment of the invention is now described with reference to Figures 10a and 10b.

In a first step (not shown), the six space station substructures 70 are transported into space, in this case in separate launch vehicles and at different times, each in the stowable configuration by a respective launch vehicle in its payload compartment 60.

In a next step 1, a first space station substructure 70 [a] is moved propelled to its required position in orbit [b] using its propulsion system 501 and attitude control system 601. The first space station substructure 70 is then transformed into the deployed configuration [c], by moving the various expandable structural modules to the expanded configuration and the various spacing mechanisms to the spaced configuration.

In a next step 2, a second space station substructure 70 [d] is moved to its required position in the vicinity of an end of the first space station substructure 70, again using its propulsion system 501 and attitude control system 601. An end of the second space station substructure 70 is then connected to the first space station substructure 70 [e], and moved transformed into the deployed configuration [f]. As can be seen, the end of the second space station substructure 70 comprising the engine system 5 is connected to the end of the first space station substructure 70 opposite to the end comprising the engine system 5.

In a next similar step 3, a third space station substructure 70 [g] is moved to its required position in the vicinity of the end of the second space station substructure 70 that is not connected to the first space station substructure 70. An end of the third space station substructure 70 is connected to the end of the second space station substructures 70 [h], and the third space station, substructure 70 is then transformed into the deployed configuration [j]. Similarly, it can be seen that the end of the third substructure 70 comprising the engine system 5 is connected to the end of the second substructure 70 opposite to the end comprising the engine system 5.

In this way, the three space station substructures 70 are joined together to form an 180° arc, i.e. a first connected set 50 of three space station substructures 70 that provides half of the toroidal space station structure 1. The steps 1 to 3 are then repeated with the remaining three substructures 70 as steps 4 to 6, to form a second connected set 50 of three substructures 70 also in the form of a 180° arc.

In a next step 7, the ends of the two connected sets 50 are brought together, using the attitude control systems 601 of the six substructures 70. In particular, the end [k] of the first connected set 50, which is the base (i.e. an expandable structural module 2) of six substructures 70, and the end [l] of the second connected set 50, which is the top (i.e. engine system 5) of six substructures 70, are moved to the position [p]. Correspondingly, the other end [m] of the first connected set 50, which is the top (i.e. engine system 5) of six substructures 70, and the other end [o] of the second connected set 50, which is the base (i.e. an expandable module 2) of a six substructures 70, are moved to the position [q].

In a final step 8, the first two ends of the first connected set 50 and second connected set 50 are connected together [r], and the second two ends of the first connected set 50 and second connected set 50 are connected together [s] simultaneously, to form the complete toroidal space station structure 1.

Figure 11 shows a disassembled toroidal space station structure according to an embodiment of the invention. The toroidal space station structure 1 can be dissembled into a number of components for further construction applications in space. The disassembly procedure follows the construction method described above in reverse order, to separate the six space station subsections 70. The subsections 70 are then straightened by retracting the mechanisms 201 between the expandable structural modules 2 into the shortened configuration. The resulting six separate space station substructures 70 are transformed to straight lengths that can then be used for a variety of other space purposes, improving the life-cycle sustainability of the toroidal space station structure 1.

While the present invention has been described and illustrated with reference to particular embodiments, it will be appreciated by those of ordinary skill in the art that the invention lends itself to many different variations not specifically illustrated herein. By way of example only, certain possible variations will now be described.

In other embodiments, the number of sides of the expandable structural module, if it has a polygonal cross-section, may for example vary between 5 and 16 sides. Alternatively, the expandable structural module may have another cross-section, for example a circular cross-section.

In other embodiments, the number of substructures/segments and the non-zero angle between the bulkheads of the connected expandable structural modules may be altered to change the diameter of the toroidal space station structure that results from the connection of the substructures.

In other embodiments, the substructure may comprise anywhere between a minimum of two expandable structural modules and a maximum of as many expandable structural modules that can be accommodated by the launch vehicle payload compartment intended to launch the substructure into space. '

In other embodiments, rather than being hinged the spacing mechanism may - comprise one or more pistons or any other suitable mechanism for providing adjustable spacing.

Reference should be made to the claims for determining the scope of the present invention.

It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. An expandable structural module (2) for a toroidal space station structure, the expandable structural module (2) comprising:
a first bulkhead (16) and a second bulkhead (16) forming first and second opposite ends of the expandable structural module (2), the first bulkhead (16) being arranged to be attached to a corresponding bulkhead of a further adjacent expandable structural module;
a plurality of adjustable structural members (27) connecting the first bulkhead and the second bulkhead (16);
wherein the expandable structural module is transformable between:
a collapsed configuration in which the first bulkhead (16) and second bulkhead (16) are held a first distance apart by the structural members (27); and
an expanded configuration in which the first bulkhead (16) and second bulkhead (16) are held a second distance apart by the structural members (27), the second distance being larger than the first distance,
**characterised in that** the first bulkhead comprises a spacing mechanism (201) for attaching the first bulkhead (16) to the corresponding bulkhead of the adjacent and adjoining expandable structural module and
wherein the spacing mechanism (201) is arranged to transform between a shortened configuration in which the first bulkhead (16) and the corresponding bulkhead are held parallel to each other, and a spaced configuration in which the first bulkhead and the corresponding bulkhead are held at a non-zero angle with respect to each other.

2. An expandable structural module (2) as claimed in claim 1, wherein each structural member (27) comprises a first part (28) connected to the first bulkhead and a second part (28) connected to the second bulkhead, the first part being hingably connected (29) to the second part.

3. An expandable structural module (2) as claimed in claim 1 or 2, wherein the first bulkhead comprises a plurality of struts (20) extending from the perimeter (17) towards the centre (24) of the bulkhead (16), wherein each strut (20) has on its surface facing the interior of the expandable module a recess (18), and wherein each strut is arranged so that a corresponding structural member (27)of the plurality of structural members (27) is at least partially located within the recess (18) when the expandable structural module is in the collapsed configuration.

4. An expandable structural module (2) as any claimed in any preceding claim, further comprising a plurality of brace members (31) connecting the first bulkhead (16) and second bulkhead (16), wherein the brace members are located between the structural members (27).

5. An expandable structural module (2) as claimed in claim 4, wherein the first bulkhead comprises a plurality of struts (20) extending from the perimeter (17) towards the centre (24) of the bulkhead (16), wherein each strut (20) has on its surface facing the interior of the expandable module a recess (18), and wherein each strut is arranged so that a corresponding brace member (31) of the plurality of brace members (31) is at least partially located within the recess (18) when the expandable structural module is in the collapsed configuration.

6. An expandable structural module (2) as claimed in claim 1, wherein the spacing mechanism comprises one or more hinged connectors (40a), a first side of each hinged connector (40a) being hingably mounted to the perimeter (17) of the first bulkhead (16).

7. An expandable structural module (2) as claimed in claim 6, wherein the one or more hinged connectors (40a) are arranged to be hingably attached to one or more corresponding hinged connectors (42) hingably mounted to the perimeter (17) of the corresponding bulkhead of the further expandable structural module.

8. A space station substructure (70) comprising a first expandable structural module (2) and a second expandable structural module (2) as claimed in any preceding claim, wherein the first bulkhead (16) of the first expandable structural module (2) is attached to the first bulkhead (16) of the second expandable structural module (2) to form at least part of the space station substructure (70), the space station substructure (70) being transformable between:
a stowable configuration in which the first expandable structural module and second expandable structural module are in the collapsed configuration;
a deployed configuration in which the first expandable structural module and second expandable structural module are in the expanded configuration.

9. A space station substructure (70) as claimed in claim 8, further comprising an engine system (5).

10. A toroidal space station structure (1) comprising a plurality of expandable structural modules (2) as claimed in any of claims 1 to 7.

11. A toroidal space station structure (1) as claimed in claim 10, wherein the toroidal space station (1) structure is a demonstration system.

12. A method of constructing a toroidal space station structure, the method comprising the steps of:
transporting a plurality of expandable structural modules (2) into space, wherein the plurality of expandable structural modules are as claimed in any of claims 1 to 7, and wherein the plurality of expandable structural modules are transported while in the collapsed configuration;
transforming the plurality of expandable structural modules into the expanded configuration;
attaching the plurality of expandable structural modules together to form the toroidal space station structure.

13. A method as claimed in claim 12, further comprising, prior to the step of transporting the plurality of expandable structural modules into space (2), the step of attaching the plurality of expandable structural modules (2) together to form a plurality of space station substructures as claimed in claim 8 or 9;
wherein the step of transporting the plurality of expandable structural modules (2) into space comprises transporting the plurality of space station substructures (70) into space, wherein the plurality of space station substructures (70) are transported while in the stowable configuration;
wherein the step of transforming the plurality of expandable structural modules (2) into the expanded configuration comprises transforming the plurality of space station substructures (70) into the deployed configuration;
and wherein the step of attaching the expandable structural modules (2) together comprises attaching the plurality of space station substructures (70) together.

## Patentansprüche

1. Expandierbares Strukturmodul (2) für eine toroidale Raumstationsstruktur, mit:
einem ersten Schott (16) und einem zweiten Schott (16), die erste und zweite gegenüberliegende Enden des expandierbaren Strukturmoduls (2) ausbilden, welches erste Schott (16) dazu angeordnet ist, an einem entsprechenden Schott eines weiteren angrenzenden expandierbaren Strukturmoduls angebracht zu werden;
einer Mehrzahl anpassbarer Strukturbauteile (27), die das erste Schott und das zweite Schott (16) verbinden;
bei dem das expandierbare Strukturmodul zwischen:
einer kollabierten Konfiguration, in der das erste Schott (16) und das zweite Schott (16) durch die Strukturbauteile (27) in einem ersten Abstand entfernt gehalten werden; und
einer expandierten Konfiguration, in der das erste Schott (16) und das zweite Schott (16) durch die Strukturbauteile (27) in einem zweiten Abstand entfernt gehalten werden, welcher zweite Abstand größer als der erste Abstand ist, transformierbar ist,
**dadurch gekennzeichnet, dass** das erste Schott einen Abstandsmechanismus (201) zum Anbringen des ersten Schotts (16) an dem entsprechenden Schott des angrenzenden und anschließenden expandierbaren Strukturmoduls aufweist, und
bei dem der Abstandsmechanismus (201) dazu angeordnet ist, zwischen einer gekürzten Konfiguration, in der das erste Schott (16) und das entsprechende Schott parallel zueinander gehalten werden, und einer beabstandeten Konfiguration, in der das erste Schott und das entsprechende Schott in einem Winkel ungleich Null in Bezug aufeinander gehalten werden, zu transformieren.

2. Expandierbares Strukturmodul (2) wie in Anspruch 1 beansprucht, bei dem jedes Strukturbauteil (27) einen ersten Teil (28), der mit dem ersten Schott verbunden ist, und einen zweiten Teil (28), der mit dem zweiten Schott verbunden ist, aufweist, welcher erste Teil gelenkig mit dem zweiten Teil verbunden (29) ist.

3. Expandierbares Strukturmodul (2) wie in Anspruch 1 oder 2 beansprucht, bei dem das erste Schott eine Mehrzahl von Streben (20), die sich von dem Umfang (17) in Richtung der Mitte (24) des Schotts (16) erstrecken, aufweist, bei dem jede Strebe (20) auf ihrer Oberfläche, die dem Inneren des expandierbaren Moduls zugewandt ist, eine Vertiefung (18) aufweist, und bei dem jede Strebe so angeordnet ist, dass ein entsprechendes Strukturbauteil (27) der Mehrzahl von Strukturbauteilen (27) zumindest teilweise innerhalb der Vertiefung (18) liegt, wenn das expandierbare Strukturmodul in der kollabierten Konfiguration ist.

4. Expandierbares Strukturmodul (2) wie in einem vorhergehenden Anspruch beansprucht, ferner mit einer Mehrzahl von Stützbauteilen (31), die das erste Schott (16) und das zweite Schott (16) verbinden, bei dem die Stützbauteile zwischen den Strukturbauteilen (27) liegen.

5. Expandierbares Strukturmodul (2) wie in Anspruch 4 beansprucht, bei dem das erste Schott eine Mehrzahl von Streben (20), die sich von dem Umfang (17) in Richtung der Mitte (24) des Schotts (16) erstrecken, aufweist, bei dem jede Strebe (20) auf ihrer Oberfläche, die dem Inneren des expandierbaren Moduls zugewandt ist, eine Vertiefung (18) aufweist, und bei dem jede Strebe so angeordnet ist, dass ein entsprechendes Stützbauteil (31) der Mehrzahl von Stützbauteilen (31) zumindest teilweise innerhalb der Vertiefung (18) liegt, wenn das expandierbare Strukturmodul in der kollabierten Konfiguration ist.

6. Expandierbares Strukturmodul (2) wie in Anspruch 1 beansprucht, bei dem der Abstandsmechanismus einen oder mehrere gelenkige Verbinder (40a) aufweist, wobei eine erste Seite jedes gelenkigen Verbinders (40a) gelenkig an dem Umfang (17) des ersten Schotts (16) montiert ist.

7. Expandierbares Strukturmodul (2) wie in Anspruch 6 beansprucht, bei dem der eine oder die mehreren gelenkigen Verbinder (40a) dazu angeordnet sind, gelenkig an einem oder mehreren entsprechenden gelenkigen Verbindern (42), die gelenkig an dem Umfang (17) des entsprechenden Schotts des weiteren expandierbaren Strukturmoduls montiert sind, angebracht zu werden.

8. Raumstationsunterstruktur (70) mit einem ersten expandierbaren Strukturmodul (2) und einem zweiten expandierbaren Strukturmodul (2) wie in einem vorhergehenden Anspruch beansprucht, bei dem das erste Schott (16) des ersten expandierbaren Strukturmoduls (2) an dem ersten Schott (16) des zweiten expandierbaren Strukturmoduls (2) zum Ausbilden zumindest eines Teils der Raumstationsunterstruktur (70) angebracht ist, welche Raumstationsunterstruktur (70) zwischen:
einer verstaubaren Konfiguration, in der das erste expandierbare Strukturmodul und das zweite expandierbare Strukturmodul in der kollabierten Konfiguration sind;
einer ausgefahrenen Konfiguration, in der das erste expandierbare Strukturmodul und das zweite expandierbare Strukturmodul in der expandierten Konfiguration sind, transformierbar ist.

9. Raumstationsunterstruktur (70) wie in Anspruch 8 beansprucht, ferner mit einem Antriebssystem (5).

10. Toroidale Raumstationsstruktur (1) mit einer Mehrzahl expandierbarer Strukturmodule (2) wie in einem der Ansprüche 1 bis 7 beansprucht.

11. Toroidale Raumstationsstruktur (1) wie in Anspruch 10 beansprucht, bei der die toroidale Raumstations-(1)-Struktur ein Demonstrationssystem ist.

12. Verfahren zum Konstruieren einer toroidalen Raumstationsstruktur, mit den Schritten:
Transportieren einer Mehrzahl expandierbarer Strukturmodule (2) in den Weltraum,
bei dem die Mehrzahl expandierbarer Strukturmodule wie in einem der Ansprüche 1 bis 7 beansprucht ist, und bei dem die Mehrzahl expandierbarer Strukturmodule transportiert wird, während sie in der kollabierten Konfiguration ist;
Transformieren der Mehrzahl expandierbarer Strukturmodule in die expandierte Konfiguration;
Anbringen der Mehrzahl expandierbarer Strukturmodule aneinander zum Ausbilden der toroidalen Raumstationsstruktur.

13. Verfahren wie in Anspruch 12 beansprucht, ferner umfassend, vor dem Schritt zum Transportieren der Mehrzahl expandierbarer Strukturmodule in den Weltraum (2), den Schritt zum Anbringen der Mehrzahl expandierbarer Strukturmodule (2) aneinander zum Ausbilden einer Mehrzahl von Raumstationsunterstrukturen wie in Anspruch 8 oder 9 beansprucht;
bei dem der Schritt zum Transportieren der Mehrzahl expandierbarer Strukturmodule (2) in den Weltraum ein Transportieren der Mehrzahl von Raumstationsunterstrukturen (70) in den Weltraum umfasst, bei dem die Mehrzahl von Raumstationsunterstrukturen (70) transportiert wird, während sie in der verstaubaren Konfiguration ist;
bei dem der Schritt zum Transformieren der Mehrzahl expandierbarer Strukturmodule (2) in die expandierte Konfiguration ein Transformieren der Mehrzahl von Raumstationsunterstrukturen (70) in die ausgefahrene Konfiguration umfasst;
und bei dem der Schritt zum Anbringen der expandierbaren Strukturmodule (2) aneinander ein Anbringen der Mehrzahl von Raumstationsunterstrukturen (70) aneinander umfasst.

## Revendications

1. Module structurel extensible (2) pour une structure de station spatiale toroïdale, le module structurel extensible (2) comprenant :
une première cloison (16) et une seconde cloison (16) formant des première et seconde extrémités opposées du module structurel extensible (2), la première cloison (16) étant agencée pour être fixée à une cloison correspondante d'un module structurel extensible adjacent supplémentaire ;
une pluralité d'éléments structurels ajustables (27) reliant la première cloison et la seconde cloison (16) ;
dans lequel le module structurel extensible peut être transformé entre :
une configuration aplatie dans laquelle la première cloison (16) et la seconde cloison (16) sont maintenues à une première distance l'une de l'autre par les éléments structurels (27) ; et
une configuration étendue dans laquelle la première cloison (16) et la seconde cloison (16) sont maintenues à une seconde distance l'une de l'autre par les éléments structurels (27), la seconde distance étant supérieure à la première distance,
**caractérisé en ce que** la première cloison comprend un mécanisme d'espacement (201) pour fixer la première cloison (16) à la cloison correspondante du module structurel extensible adjacent et voisin, et
dans lequel le mécanisme d'espacement (201) est agencé pour se transformer entre une configuration raccourcie dans laquelle la première cloison (16) et la cloison correspondante sont maintenues parallèles l'une à l'autre, et une configuration espacée dans laquelle la première cloison et la cloison correspondante sont maintenues à un angle non nul l'une par rapport à l'autre.

2. Module structurel extensible (2) selon la revendication 1, dans lequel chaque élément structurel (27) comprend une première partie (28) connectée à la première cloison et une seconde partie (28) connectée à la seconde cloison, la première partie étant connectée de manière articulée (29) à la seconde partie.

3. Module structurel extensible (2) selon la revendication 1 ou 2, dans lequel la première cloison comprend une pluralité d'entretoises (20) s'étendant à partir du périmètre (17) vers le centre (24) de la cloison (16), dans lequel chaque entretoise (20) présente sur sa surface orientée vers l'intérieur du module extensible un évidement (18) et dans lequel chaque entretoise est agencée de sorte qu'un élément structurel correspondant (27) de la pluralité d'éléments structurels (27) est au moins partiellement situé à l'intérieur de l'évidement (18) lorsque le module structurel extensible est dans la configuration aplatie.

4. Module structurel extensible (2) selon l'une quelconque des revendications précédentes, comprenant en outre une pluralité d'éléments de renfort (31) reliant la première cloison (16) et la seconde cloison (16), dans lequel les éléments de renfort sont situés entre les éléments structurels (27).

5. Module structurel extensible (2) selon la revendication 4, dans lequel la première cloison comprend une pluralité d'entretoises (20) s'étendant à partir du périmètre (17) vers le centre (24) de la cloison (16), dans lequel chaque entretoise (20) présente sur sa surface orientée vers l'intérieur du module extensible un évidement (18) et dans lequel chaque entretoise est agencée de telle sorte qu'un élément de renfort correspondant (31) de la pluralité d'éléments de renfort (31) est au moins partiellement situé à l'intérieur de l'évidement (18) lorsque le module structurel extensible est dans la configuration aplatie.

6. Module structurel extensible (2) selon la revendication 1, dans lequel le mécanisme d'espacement comprend un ou plusieurs connecteurs articulés (40a), un premier côté de chaque connecteur articulé (40a) étant monté de manière articulée sur le périmètre (17) de la première cloison (16).

7. Module structurel extensible (2) selon la revendication 6, dans lequel les un ou plusieurs connecteurs articulés (40a) sont agencés pour être fixés de manière articulée à un ou plusieurs connecteurs articulés correspondants (42) montés de manière articulée sur le périmètre (17) de la cloison correspondante du module structurel extensible supplémentaire.

8. Sous-structure de station spatiale (70) comprenant un premier module structurel extensible (2) et un second module structurel extensible (2) selon l'une quelconque des revendications précédentes, dans laquelle la première cloison (16) du premier module structurel extensible (2) est fixée à la première cloison (16) du second module structurel extensible (2) pour former au moins une partie de la sous-structure de station spatiale (70), la sous-structure de station spatiale (70) pouvant être transformée entre :
une configuration escamotable dans laquelle le premier module structurel extensible et le second module structurel extensible sont dans la configuration aplatie;
une configuration déployée dans laquelle le premier module structurel extensible et le second module structurel extensible sont dans la configuration étendue.

9. Sous-structure de station spatiale (70) selon la revendication 8, comprenant en outre un système de moteur (5).

10. Structure de station spatiale toroïdale (1) comprenant une pluralité de modules structurels extensibles (2) selon l'une quelconque des revendications 1 à 7.

11. Structure de station spatiale toroïdale (1) selon la revendication 10, dans laquelle la structure de station spatiale toroïdale (1) est un système de démonstration.

12. Procédé de construction d'une structure de station spatiale toroïdale, le procédé comprenant les étapes consistant à :
transporter une pluralité de modules structurels extensibles (2) dans l'espace, dans lequel la pluralité de modules structurels extensibles sont tels que revendiqués dans l'une quelconque des revendications 1 à 7 et dans lequel la pluralité de modules structurels extensibles sont transportés alors qu'ils sont dans la configuration aplatie ;
transformer la pluralité de modules structurels extensibles dans la configuration étendue ;
fixer la pluralité de modules structurels extensibles ensemble pour former la structure de station spatiale toroïdale.

13. Procédé selon la revendication 12, comprenant en outre, avant l'étape de transport de la pluralité de modules structurels extensibles jusque dans l'espace (2), l'étape de fixation de la pluralité de modules structurels extensibles (2) ensemble pour former une pluralité de sous-structures de station spatiale selon la revendication 8 ou 9 ;
dans lequel l'étape de transport de la pluralité de modules structurels extensibles (2) dans l'espace comprend un transport de la pluralité de sous-structures de station spatiale (70) jusque dans l'espace, dans lequel la pluralité de sous-structures de station spatiale (70) sont transportées tandis qu'elles sont dans la configuration escamotable ;
dans lequel l'étape de transformation de la pluralité de modules structurels extensibles (2) dans la configuration étendue comprend une transformation de la pluralité de sous-structures de station spatiale (70) dans la configuration déployée ;
et dans lequel l'étape de fixation des modules structurels extensibles (2) ensemble comprend une fixation de la pluralité de sous-structures de station spatiale (70) ensemble.
